# EUROPÄISCHE PATENTSCHRIFT

(11) **EP 1 451 127 B1**
(45) Veröffentlichungstag und Bekanntmachung des Hinweises auf die Patenterteilung: **19.10.2005**
(21) Anmeldenummer: 02781312.0
(22) Anmeldetag: 08.11.2002
(51) Int. Cl.: C04B 35/443, C04B 35/117

(54) **GEBRANNTES FEUERFESTES KERAMISCHES FORMTEIL, SEINE VERWENDUNG UND VERSATZ ZUR HERSTELLUNG DES FORMETEILS**
FIRED REFRACTORY CERAMIC MOULDED PIECE, USE AND COMPOSITION THEREOF FOR PRODUCTION OF MOULDED PIECES
PIECE FA ONNEE EN CERAMIQUE REFRACTAIRE CUITE, SON UTILISATION ET MELANGE SERVANT A PRODUIRE CETTE PIECE

(30) Priorität: 08.12.2001 DE 10160366
(43) Veröffentlichungstag der Anmeldung: 01.09.2004
(73) Patentinhaber: Refractory Intellectual Property GmbH & Co. KG, 1100 Wien (AT)
(72) Erfinder: BUCHBERGER, Bernd, A-8793 Trofaiach (AT); HORN, Markus, D-35423 Lich (DE); NILICA, Roland, A-8700 Leoben (AT)
(74) Vertreter: Becker, Thomas
(86) Internationale Anmeldenummer: PCT/EP2002/012489
(87) Internationale Veröffentlichungsnummer: WO 2003/053879

## Beschreibung

Die Erfindung betrifft ein gebranntes feuerfestes keramisches Formteil sowie eine mögliche Verwendung.

Aus Schulle "Feuerfeste Werkstoffe", 1. Auflage, 1990 (ISBN 3-342-00306-5), Seiten 288, 289 sind feuerfeste Werkstoffe auf Basis Chromkorund mit einem Anteil von etwa 10 Gew.-% Cr₂O₃ und etwa 90 Gew.-% Al₂O₃ bekannt. Dort werden auch feuerfeste Werkstoffe auf Basis Cr₂O₃/ZrO₂ erwähnt. Gleichzeitig wird angegeben, dass der Einsatz solcher Werkstoffe als Feuerfestkeramik wenig bekannt ist.

In der DE 197 27 917 C1 wird ein Versatz aus 5 bis 35 Gew.-% Cr₂O₃ in einer Korngröße < 0,1 mm, 1 bis 10 Gew.-% ZrO₂ in einer Korngröße zwischen 0,5 und 4 mm sowie 55 bis 94 Gew.-% Al₂O₃ in einer Korngröße zwischen 0,2 und 4,0 mm zur Herstellung gebrannter feuerfester keramischer Formteile beschrieben, die in schlackeführenden Öfen mit hoher Temperaturwechselbeständigkeit und hohen Betriebstemperaturen einsetzbar sind, zum Beispiel in Drehrohröfen zur Müllverbrennung. Erwähnt wird eine hohe Gefügeelastizität und gutes Korrosionsverhalten dieser Steine.

Gleichwohl kommt es zum Beispiel bei Verbrennungsanlagen für Sondermüll immer wieder zu einer verstärkten Korrosion der Matrix des Feuerfestmaterials. Dies gilt insbesondere im Fall stark alkalienhaltiger Schlacken oder im Fall von Schlacken, die hohe Gehalte an Eisenoxid aufweisen beziehungsweise bei Schlacken, deren C/S-Verhältnis (Basizität) im Verfahrensprozess variiert. Hier können auch die aus einem Versatz gemäß DE 197 27 917 C1 gebrannten Steine an ihre Grenzen stoßen, das heißt ein unbefriedigendes Verschleißverhalten zeigen.

Aufgabe der Erfindung ist es, Formteile anzubieten, die gegenüber den Produkten gemäß DE 197 27 917 C1 eine verbesserte Korrosionsbeständigkeit aufweisen, insbesondere eine verbesserte Beständigkeit gegenüber Schlacken mit wechselnder/sich verändernder Basizität.

Anwendungsgebiete solcher Teile können sein: Auskleidungen von Müllverbrennungsanlagen und anderen Öfen/Schmelzaggregaten oder Vergasungsanlagen, in denen aggressive Schmelzen und/oder Schlacken auftreten.

Grundgedanke der Erfindung ist es, insbesondere die Matrix des Formteils gegenüber einem Schlackenangriff stabiler (resistenter) zu gestalten.

Ein erfindungsgemäßer gebrannter feuerfester keramischer Formteil zeichnet sich in seiner allgemeinsten Ausführungsform durch eine Mischspinell-Matrix aus, in der relativ grobe Körner auf Basis Korund und/oder Chromkorund sowie ZrO₂ vorliegen. Die gewünschten Produkteigenschaften werden zum Beispiel bei gleichzeitiger Anwesenheit von Chromkorund und Zirkonkorund oder bei gleichzeitiger Anwesenheit von Korund und Zirkonmullit erreicht.

Die Mischspinell-Matrix lässt sich aus entsprechenden Versatzkomponenten wie Cr₂O₃, MgO oder Al₂O₃ als Einzelkomponenten und/oder in Form vorsynthetisierter Spinelle, insbesondere MA-Spinelle (MgO-Al₂O₃) oder MCA-Spinelle (MgO-Cr₂O₃-Al₂O₃) oder auf andere Weise herstellen.

Die Chromkorundkörner finden ihren Ursprung im Versatz in den Oxiden von Chrom und Aluminium und entstehen während des Brennprozesses. Sie können auch zumindest teilweise als vorreagierte Komponente eingesetzt werden.

Die ZrO₂-haltigen Körner können aus Baddeleyit enthaltendem Material (Rohstoff) stammen, aber beispielsweise auch aus Sinter-Zirkonmullit, Schmelz-Zirkonmullit, Sinter-Zirkonkorund, Schmelz-Zirkonkorund, oder aus einem ZAC Material (vorreagiertes Material aus SiO₂, ZrO₂ und Al₂O₃), einzeln oder in Mischung.

Es kann eine Versatzkomponente auf Basis eines MA-Spinells [(MgO, Al₂O₃)-Spinells] in einer Fraktion < 0,5 oder < 0,3 oder <0,1 mm verwendet werden. Dieser Spinell, der bevorzugt nicht stöchiometrisch vorliegt, zum Beispiel mit MgO-Überschuss, reagiert mit Chromoxid des Versatzes zu einem Mischspinell der Form (Mg)²⁺(Al, Cr)₂³⁺O₄ und bildet den wesentlichen Anteil des Grundmaterials der Matrix des gebrannten Produktes. Dieser Mischspinell weist eine hervorragende Resistenz gegenüber den genannten kritischen Schlacken auf.

Aluminiumoxid, insbesondere als Komponente im Kornbereich 0,5 - 10 mm, kann mit (feinteiligem) Chromoxid reagieren und führt zur Bildung der genannten Chromkorund-Körner, die in der Matrix ebenso verteilt sind wie die genannten ZrO₂-hältigen Körner.

Es ist selbstverständlich, dass je nach Grad der Verunreinigung der Rohstoffe weitere Bestandteile in den Versatzkomponenten vorliegen können und damit zu Nebenbestandteilen des Formteils werden.

Im gebrannten Produkt können die genannten Grobkörner einen mittleren Durchmesser (d₅₀) zwischen 0,5 bis 10 mm aufweisen.

Je nach Brenntemperatur und Ofenatmosphäre sowie Anteilen an Chromoxid beziehungsweise Korund (Al₂O₃) kann die Chromoxid-Konzentration innerhalb der Chromkorundkörner schwanken, wobei der Brennprozeß so geführt werden kann, dass innerhalb der Chromkorundkörner mindestens eine Zone, insbesondere Kernzone, verbleibt, die frei von Chromoxid ist.

Entsprechend kann der Brennprozeß so geführt werden, dass die Chromkorundkörner im Nahbereich ihrer Oberfläche die höchste Chromoxid-Konzentration aufweisen.

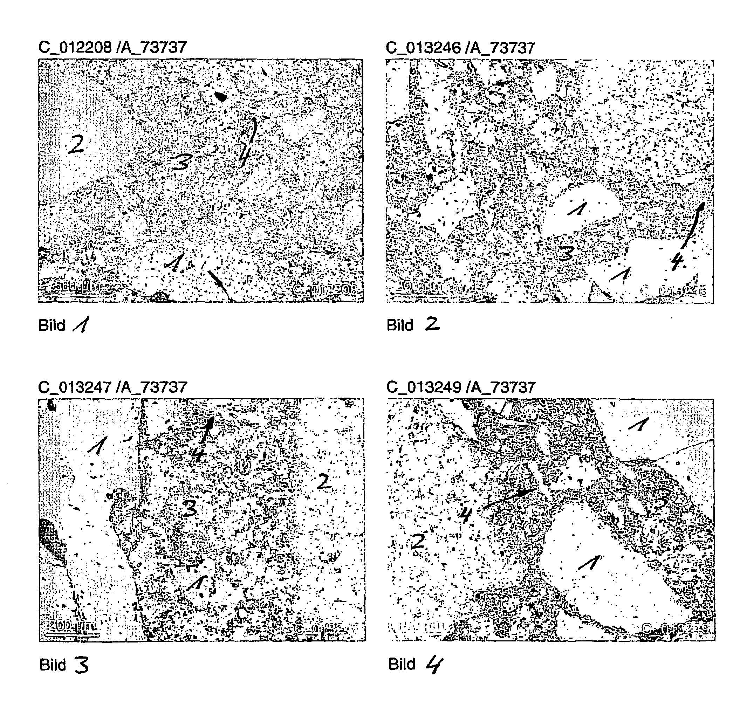

Die Bilder 1 bis 4 zeigen mikroskopische Aufnahmen im angegebenen Maßstab von Anschliffen eines gebrannten Produkts. Dabei bedeuten 1: Chromkorundkörner, 2: Zirkonkorundkörner, 3: Mischspinellmatrix, 4: Poren. Deutlich sind die groben Körner auf Basis Chromkorund und Zirkonkorund in der feinkörnigen Spinellmatrix zu erkennen.

Der Matrixanteil, das heißt der im Wesentlichen aus dem genannten Mischspinell bestehende Anteil, kann zwischen 10 und 70 Gew.-% der Gesamtmasse, üblicherweise zwischen 15 und 50 Gew.-% liegen.

Aufgrund der hervorragenden Beständigkeit insbesondere gegenüber aggressiven Schlacken wie alkalienhaltigen Schlacken oder Schlacken mit hohen Eisenoxidgehalten eignet sich das gebrannte feuerfeste keramische Formteil zur Auskleidung eines Ofens zur Müllverbrennung, beispielsweise zur Sondermüllverbrennung, wo derartige Schlacken auftreten.

Der Versatz zur Herstellung des vorgenannten Formteils umfasst in seiner allgemeinsten Ausführungsform folgende Komponenten (die sich alleine oder mit zusätzlichen Komponenten auf 100 Gew.-% addieren):
- 2 bis 35 Gew.-% Chromoxid < 0,5 mm,
- 1 bis 15 Gew.-% Zirkoniumdioxid > 0,2 mm,
- 1 bis 12 Gew.-% Magnesiumoxid < 0,5 mm,
- 38 bis 96 Gew.-% Aluminiumoxid < 10 mm.

Die Komponenten des Versatzes können als reine Oxide oder Stoffe eingesetzt werden, die die genannten Oxide in den genannten Anteilen in den Versatz einbringen.

Ein besonderes Merkmal dieses Versatzes liegt darin, dass sich der Versatz mit einem ausschließlich temporären Bindemittel, beispielsweise Sulfitablauge, zu Formteilen verarbeiten und anschließend brennen lässt, wobei die Sulfitablauge weitestgehend vollständig verbrennt.

Damit kann auf die Verwendung beispielsweise phosphathaltiger Bindemittel erfindungsgemäß verzichtet werden, worin ein weiterer wesentlicher Vorteil gegenüber dem Stand der Technik liegt.

Umgekehrt lässt sich der Versatz gemäß DE 197 27 917 C1 nicht mit einem ausschließlich temporären Bindemittel wie Sulfitablauge verarbeiten. Bei dem bekannten Versatz lässt sich mit einem temporären Bindemittel keine ausreichende Grünstandsfestigkeit erreichen.

Der Versatz kann im Rahmen folgender Maßnahmen variiert werden:
- Die Kornfraktion der Al₂O₃-Komponente kann < 6 mm oder < 4 mm betragen,
- die Kornfraktion der ZrO₂-hältigen Komponente kann zwischen 1 und 4 mm liegen,
- die Kornfraktionen von Cr₂O₃ und MgO können < 0,2 mm, < 0,1 mm oder auch > 0,05 mm betragen,
- Al₂O₃, Cr₂O₃ und/oder MgO können zumindest teilweise als Spinell, insbesondere MA- oder MCA Spinell, eingebracht werden, beispielsweise 5 bis 25 Gew.-%,
- wird MgO zumindest teilweise als Spinell vorgelegt, ist anteilig die Al₂O₃-Komponente beziehungsweise die Cr₂O₃-Komponente zu reduzieren,
- der Gehalt an Cr₂O₃ kann auf 5 bis 25 Gew.-% eingestellt werden,
- der ZrO₂-Gehalt im Versatz kann 1 bis 6 Gew.-% betragen,
- die Al₂O₃-Versatzkomponente kann zwischen 64 und 87 Gew.-% des Gesamtversatzes ausmachen, ein Teil kann in feiner Fraktion (< 0,1 mm) vorliegen,
- der SiO₂-Gehalt sollte auf < 3,0 Gew.-% oder besser: < 0,1 Gew.-% beschränkt werden. In diesem Zusammenhang wird vorgeschlagen, eine ZrO₂-haltige Komponente zu verwenden, die möglichst SiO₂-frei ist,
- der Gehalt an Fe₂O₃ kann < 0,5 Gew.-% betragen,
- der MgO-Anteil im Versatz kann 3 bis 8 Gew.-% betragen,
- der Al₂O₃-Anteil kann zumindest teilweise als Chromkorund eingebracht werden,
- der MA-Spinell kann beispielsweise folgende Zusammensetzung aufweisen (alle Angaben in Gewichts - %):

| | |
|---|---|
| MgO | 31-35 |
| Al₂O₃ | 64-67 |
| CaO | 0,3-0,6 |
| Fe₂O₃ | 0,1-0,3 |

neben weiteren Bestandteilen wie Na₂O, SiO₂, deren Anteil jeweils <0,2 Gew.-% beträgt.

Der Versatz wird, einschließlich seines temporären Bindemittels, in üblicher Weise aufbereitet und zu Formteilen verarbeitet, insbesondere verpresst. Er wird anschließend bei Temperaturen zwischen 1.200 und 1.700° C gebrannt.

Ausgehend von einem Versatz aus:
- 8 Gew.-% Chromoxid < 0,1 mm
- 5 Gew.-% Zirkonkorund 0,5 bis 4 mm
- 15 Gew.-% nicht stöchiometrischer MA-Spinell (der vorgenannten Art) < 0,1 mm
- Rest Korund < 4 mm
und Zugabe von 3 Gew.-% Sulfitablauge (bezogen auf die Gesamtheit der Versatzkomponenten) wurden Steine unter einem Druck von 100 MPa verpresst und bei 1.550° C gebrannt. Die Steine zeigten folgende Kennwerte:

| | |
|---|---|
| Rohdichte (gemäß DIN EN 993-1) | 3,35 g/cm³ |
| offene Porosität (gemäß DIN EN 993-1) | 15,1 % |
| Kaltdruckfestigkeit (gemäß DIN 51067) | 170 N/mm² |
| Druckerweichen (gemäß DIN 51053 T1) | T_{c} > 1.700° C |
| Temperaturwechselbeständigkeit (gemäß DIN EN 993, Teil 11 gegenüber Wasser) | > 30 Zyklen. |

Diese Werte liegen im Bereich der Steine gemäß DE 197 27 917 C1. Die erfindungsgemäßen Steine erweisen sich jedoch in ihrem Korrosionsverhalten als deutlich überlegen, insbesondere gegenüber den genannten kritischen Schlacken. Ihre Haltbarkeit lag bei einem Laborversuch (Verschlackungstest im Induktionstiegelofen) 30 % höher.

## Patentansprüche

1. Gebranntes feuerfestes keramisches Formteil mit einer Spinellmatrix auf Basis (Mg)²⁺ (Al, Cr)₂³⁺ O₄, in der gröbere Körner auf Basis Chromkorund und/oder Korund sowie gröbere Körner auf Basis ZrO₂ vorliegen.

2. Formteil nach Anspruch 1, bei dem die gegenüber den Körnern der Spinellmatrix gröberen Körner aus den Komponenten Chromkorund und Zirkonkorund bestehen.

3. Formteil nach Anspruch 1, bei dem die Korund- und/oder Chromkorundkörner einen mittleren Durchmesser (d₅₀) von 0,5 bis 10 mm aufweisen.

4. Formteil nach Anspruch 1, bei dem die ZrO₂-haltigen Körner einen mittleren Durchmesser (d₅₀) von 0,5 bis 10 mm aufweisen.

5. Formteil nach Anspruch 1, bei dem die Spinellmatrix 10 bis 70 Gew.-% der Gesamtmasse ausmacht.

6. Formteil nach Anspruch 1, hergestellt aus einem Versatz mit
| | |
|---|---|
| 6.1 | 2 bis 35 Gew.-% Cr₂O₃ in einer Kornfraktion < 0,5 mmm, |
| 6.2 | 1 bis 15 Gew.-% ZrO₂ in einer Kornfraktion > oder gleich 0,2 mm, |
| 6.3 | 1 bis 12 Gew.-% MgO in einer Kornfraktion < 0,5 mm, |
| 6.4 | 38 bis 96 Gew.-% Al₂O₃ in einer Kornfraktion < 10 mm. |

7. Formteil nach Anspruch 6, mit der Maßgabe, dass zumindest ein Teil der Versatz-Komponenten MgO, Al₂O₃ beziehungsweise Cr₂O₃ als Spinell vorliegt.

8. Formteil nach Anspruch 6, mit der Maßgabe, dass zumindest ein Teil der Versatz-Komponenten als MA- oder MCA- Spinell vorliegt.

9. Formteil nach Anspruch 6, mit der Maßgabe, dass der Anteil an Cr₂O₃ 5 bis 25 Gew.-% beträgt.

10. Formteil nach Anspruch 6, mit der Maßgabe, dass der ZrO₂-Anteil zwischen 1 und 6 Gew.-% beträgt.

11. Formteil nach Anspruch 6, mit der Maßgabe, dass der Anteil an Al₂O₃ zwischen 64 und 87 Gew.-% liegt.

12. Formteil nach Anspruch 6, mit der Maßgabe, dass der Fe₂O₃-Gehalt < 0,5 Gew.-% beträgt.

13. Formteil nach Anspruch 6, mit der Maßgabe, dass der ZrO₂-Anteil von einem Baddeleyit enthaltenden Rohstoff gebildet wird.

14. Formteil nach Anspruch 6, mit der Maßgabe, dass der ZrO₂-Anteil von Sinter-Zirkonmullit, Schmelz-Zirkonmullit, Sinter-Zirkonkorund, Schmelz-Zirkonkorund oder einem ZAC-Material, einzeln oder in Mischung gebildet wird.

15. Formteil nach Anspruch 6, mit der Maßgabe, dass der ZrO₂-Anteil in einer Korngröße zwischen 1 und 4 mm vorliegt.

16. Formteil nach Anspruch 8, mit der Maßgabe, dass der Anteil des MA-Spinells zwischen 5 und 25 Gew.% beträgt.

17. Formteil nach Anspruch 6, mit der Maßgabe, dass mindestens eine der Cr₂O₃ und MgO-hältigen Komponenten in einer Kornfraktion < 0,2 mm vorliegt.

18. Formteil nach Anspruch 6, mit der Maßgabe, dass mindestens eine der Cr₂O₃ und MgO-hältigen Komponenten in einer Kornfraktion < 0,1 mm vorliegt.

19. Formteil nach Anspruch 6, mit der Maßgabe, dass bis zu 30 Gew.-% als Al₂O₃ in einer Fraktion < 0,1 mm vorliegen.

20. Formteil nach Anspruch 6, mit der Maßgabe, dass Al₂O₃ in einer Fraktion > 0,2 mm vorliegt.

21. Verwendung des Formteils nach einem der Ansprüche 1 bis 20 zur Auskleidung eines Ofens zur Müllverbrennung, insbesondere Sondermüllverbrennung.

## Claims

1. Fired refractory ceramic moulded piece with a spinel matrix based on (Mg)²⁺ (AI, Cr)₂³⁺ O₄, in which coarser particles based on chromium corundum and/or corundum and coarser particles based on ZrO₂ are present.

2. Moulded piece according to claim 1, in which the coarser particles vis-à-vis the particles of the spinel matrix consist of the components chromium corundum and zirconium corundum.

3. Moulded piece according to claim 1, in which the corundum and/or chromium corundum grains have an average diameter (d_{.50}) of 0.5 to 10 mm.

4. Moulded piece according to claim 1, in which the ZrO₂-containing grains have an average diameter (d_{.50}) of 0.5 to 10 mm.

5. Moulded piece according to claim 1, in which the spinel matrix constitutes 10 to 70 % by weight of the total mass.

6. Moulded piece according to claim 1, made of a composition with
| | |
|---|---|
| 6.1 | 2 to 35 % by weight Cr₂O₃ in a grain-size fraction < 0.5 mm, |
| 6.2 | 1 to 15 % by weight ZrO₂ in a grain-size fraction > or equal to 0.2 mm, |
| 6.3 | 1 to 12 % by weight MgO in a grain-size fraction of < 0.5 mm, |
| 6.4 | 38 to 96 % by weight Al₂O₃ grain-size fraction of < 10 mm. |

7. Moulded piece in accordance with claim 6, in which at least a part of the composition-components MgO, Al₂O₃, or Cr₂O₃ is present as a spinel.

8. Moulded piece according to claim 6, in which at least a part of the composition-components is present as MA- or MCA-spinel.

9. Moulded piece according to claim 6, in which the Cr₂O₃ content is 5 to 25 % by weight.

10. Moulded piece according to claim 6, in which the ZrO₂-content is between 1 and 6 % by weight.

11. Moulded piece according to claim 6, in which the Al₂O₃-content is between 64 and 87 % by weight.

12. Moulded piece according to claim 6, with Fe₂O₃-content < 0.5 % by weight.

13. Moulded piece according to claim 6, in which the ZrO₂-content is fashioned by a baddelyite-containing raw material.

14. Moulded piece according to claim 6, in which the ZrO₂ content is made up by a sinter-zirconium mullite, fused zirconium mullite, sinter-zirconium corundum, fused zirconium corundum or a ZAC material, separately or as a mixture.

15. Moulded piece according to claim 6, in which the ZrO₂-content is present in a grain-size between 1 and 4 mm.

16. Moulded piece according to claim 8, with an MA-spinel content of between 5 and 25 % by weight.

17. Moulded piece according to claim 6, in which at least one of the Cr₂O₃ - and MgO containing-components is present in a grain-size of < 0.2 mm.

18. Moulded piece according to claim 6, in which at least one of the Cr₂O₃ and MgO-containing components is present in grain-size fraction of < 0.1 mm.

19. Moulded piece according to claim 6, in which up to 30 % by weight is present as Al₂O₃ in a grain-size fraction of < 0.1 mm.

20. Moulded piece according to claim 6, in which Al₂O₃ is present in a grain-size fraction of > 0.2 mm.

21. Use of the moulded piece in accordance with one of the claim 1 to 20 for lining a furnace burning refuse, particularly special type refuse.

## Revendications

1. Pièce en céramique moulée réfractaire cuite avec une matrice de spinelle à base de (Mg)²⁺ (Al, Cr)₂³⁺ O₄, dans laquelle il y a des grains plus gros à base de corindon de chrome et/ou de corindon, ainsi que des grains plus gros à base de ZrO₂.

2. Pièce moulée selon la revendication 1, dans laquelle les grains plus gros par rapport aux grains de la matrice de spinelle consistent dans les composants corindon de chrome et corindon de zirconium.

3. Pièce moulée selon la revendication 1, dans laquelle les grains de corindon et/ou de corindon de chrome ont un diamètre moyen (d₅₀) de 0,5 à 10 mm.

4. Pièce moulée selon la revendication 1, dans laquelle les grains contenant du ZrO₂ ont un diamètre moyen (d₅₀) de 0,5 à 10 mm.

5. Pièce moulée selon la revendication 1, dans laquelle la matrice de spinelle constitue 10 à 70 % en poids de la masse totale.

6. Pièce moulée selon la revendication 1, réalisée en un mélange avec
| | |
|---|---|
| 6.1 | 2 à 35 % en poids de Cr₂O₃ dans une fraction granulométrique < 0,5 mm, |
| 6.2 | 1 à 15 % en poids de ZrO₂ dans une fraction granulométrique > ou égale à 0,2 mm, |
| 6.3 | 1 à 12 % en poids de MgO dans une fraction granulométrique < 0,5 mm, |
| 6.4 | 38 à 96 % en poids de Al₂O₃ dans une fraction granulométrique < 10 mm. |

7. Pièce moulée selon la revendication 6, avec la condition qu'au moins une partie des composants MgO, Al₂O₃, respectivement Cr₂O₃ du mélange est présente sous forme de spinelle.

8. Pièce moulée selon la revendication 6, avec la condition qu'au moins une partie des composants du mélange est présente sous forme de spinelle MA ou MCA.

9. Pièce moulée selon la revendication 6, avec la condition que la proportion de Cr₂O₃ est de 5 à 25 % en poids.

10. Pièce moulée selon la revendication 6, avec la condition que la proportion de ZrO₂ est de 1 à 6 % en poids.

11. Pièce moulée selon la revendication 6, avec la condition que la proportion de Al₂O₃ est de 64 à 87 % en poids.

12. Pièce moulée selon la revendication 6, avec la condition que la proportion de Fe₂O₃ est de < 0,5 % en poids.

13. Pièce moulée selon la revendication 6, avec la condition que la proportion de ZrO₂ est constituée d'une matière première contenant de la baddeleyite.

14. Pièce moulée selon la revendication 6, avec la condition que la proportion de ZrO₂ est constituée de' mullite de zirconium frittée, de mullite de zirconium fondue, de corindon de zirconium fritté, de corindon de zirconium fondu ou d'un matériau ZAC, seuls ou en mélanges.

15. Pièce moulée selon la revendication 6, avec la condition que la proportion de ZrO₂ est présente dans une granulométrie comprise entre 1 et 4 mm.

16. Pièce moulée selon la revendication 8, avec la condition que la proportion de spinelle MA est comprise entre 5 et 25 % en poids.

17. Pièce moulée selon la revendication 6, avec la condition qu'au moins un des composants contenant du Cr₂O₃ et du MgO est présent en une fraction granulométrique < 0,2 mm.

18. Pièce moulée selon la revendication 6, avec la condition qu'au moins un des composants contenant du Cr₂O₃ et du MgO est présent en une fraction granulométrique < 0, 1 mm.

19. Pièce moulée selon la revendication 6, avec la condition que jusqu'à 30 % en poids sont présents sous forme de Al₂O₃ en une fraction granulométrique < 0,1 mm.

20. Pièce moulée selon la revendication 6, avec la condition que Al₂O₃ est présent en une fraction granulométrique > 0,2 mm.

21. Utilisation de la pièce moulée selon l'une des revendications 1 à 20 pour le garnissage d'un four d'incinération des ordures, en particulier d'incinération des ordures spéciales.
